# EUROPEAN PATENT APPLICATION

(11) **EP 4 851 200 A1**
(43) Date of publication of application: **09.12.2026**
(21) Application number: 25748283.6
(22) Date of filing: 22.01.2025
(51) Int. Cl.: C08F 2/48, C08F 20/10, G02B 1/04, G02C 11/00

(54) **PHOTOCURABLE RESIN COMPOSITION, OPTICAL MOLDED PRODUCT, AND OPTICAL DEVICE**

(30) Priority: 31.01.2024 JP 2024012799; 22.04.2024 JP 2024069302
(71) Applicant: Mitsui Chemicals, Inc., Tokyo 104-0028 (JP)
(72) Inventor: TATENO Kotaro, Tokyo 104-0028 (JP); TSUKADA Yuichi, Tokyo 104-0028 (JP); MIYAO Hiroshi, Tokyo 104-0028 (JP); NAGATA Kei, Tokyo 104-0028 (JP); YAMAMOTO Shingo, Tokyo 104-0028 (JP)
(74) Representative: Hoffmann Eitle
(86) International application number: PCT/JP2025/001946
(87) International publication number: WO 2025/164475

(57) **Abstract**

A photocurable resin composition capable of being used for an optical molded body, wherein a humidity swelling ratio α1, measured in a cured film produced using the photocurable resin composition according to a predetermined condition and measured according to a predetermined method, is 1.00% or less.

## Description

### TECHNICAL FIELD

The present invention relates to a photocurable resin composition, an optical molded body, and an optical device.

### BACKGROUND ART

In recent years, from the viewpoint of heat resistance and low birefringence, a thermoplastic resin or an ultraviolet-curable resin composition has been studied for an optical system lens. Among these, a methacrylic resin composition which is a thermoplastic resin has been studied. Examples of the methacrylic resin composition include those described in Patent Document 1 and Patent Document 2.

Patent Document 1 discloses a methacrylic resin composition intended to provide high heat resistance, highly controlled birefringence, high light transmittance in a long optical path, and excellent color tone and transparency, the methacrylic resin composition including a methacrylic resin having at least a structural unit derived from an N-substituted maleimide monomer in a main chain, in which a glass transition temperature is higher than 120°C and 160°C or lower, a melt viscosity under conditions of a shear rate of 1,000 sec⁻¹ at a resin temperature of 270°C is 250 Pa·sec or less, an absolute value of a photoelastic coefficient is 1 × 10⁻¹² Pa⁻¹ or less, and in a solution obtained by dissolving the resin composition at 20 mass/volume% (w/v%) in chloroform, a light transmittance measured under conditions of an optical path length of 100 mm and a wavelength of 470 nm is 94% or more, and a light transmittance measured under conditions of a wavelength of 700 nm is 96% or more.

Patent Document 2 discloses a photocurable composition which is rapidly curable, is free from anaerobic curing, has low viscosity, has little odor, and has excellent storage stability, and that is intended to provide a photocurable composition in which a cured product obtained therefrom is excellent in properties required for lenses, such as colorless transparency, low optical distortion, heat resistance, low water absorption, toughness, and high hardness, a photocurable composition containing a tricyclodecane skeleton di(meth)acrylate (A), a trifunctional or tetrafunctional secondary thiol (B), a cleavage-type photopolymerization initiator (C), and a hindered phenol-based antioxidant (D), in which the photocurable composition does not contain a primary thiol, and a content ratio (weight ratio) of the components (A), (B), (C), and (D) is in the following range.
Component (A)/component (B) = 75/25 to 95/5
Component (C): 2 to 10 parts by weight with respect to 100 parts by weight of the total of components (A) and (B)
Component (D): 0.1 to 1 part by weight with respect to 100 parts by weight of the total of components (A) and (B)

### RELATED DOCUMENT

### PATENT DOCUMENT

Patent Document 1: Japanese Unexamined Patent Publication No. 2019-35015
Patent Document 2: Japanese Unexamined Patent Publication No. 2022-32186

### SUMMARY OF THE INVENTION

### TECHNICAL PROBLEM

The present invention provides a photocurable resin composition capable of reducing the occurrence of cracks in an optical molded body.

### SOLUTION TO PROBLEM

The present inventors conducted a thorough investigation in order to achieve the above-described object. As a result, the present inventors have found that a humidity swelling ratio of the photocurable resin composition, which is measured under specific conditions, is related to the occurrence of cracks in an optical molded body to be obtained. As a result of further intensive studies based on the above-described findings, the present inventors have found that the occurrence of cracks in an optical molded body can be reduced by using a photocurable resin composition in which a humidity swelling ratio measured under specific conditions is 1.00% or less, thereby completing the present invention.

[1] A photocurable resin composition capable of being used for an optical molded body,
   wherein a humidity swelling ratio α1, measured in a cured film produced using the photocurable resin composition according to the following <cured film preparation conditions> and measured according to the following <humidity-controlled thermomechanical analysis (humidity-controlled TMA)> is 1.00% or less.

### <Cured film preparation conditions>

A PET film having a thickness of 100 µm and a size of 100 mm × 100 mm, and a silicone sheet (material: silicone rubber, hardness: 50 degrees) having a thickness of 500 µm and a size of 100 mm × 100 mm with a circular hole having a diameter of 50 mmφ are placed in this order on alkali-free glass having a thickness of 2.0 mm and a size of 100 mm × 100 mm, the circular hole portion is filled with the photocurable resin composition, a PET film having a thickness of 100 µm and a size of 100 mm × 100 mm and alkali-free glass having a thickness of 2.0 mm and a size of 100 mm × 100 mm are further placed in this order thereon, the height is adjusted by placing the laminate on a stainless-steel lab jack, the photocurable resin composition is irradiated with LED light having a wavelength of 405 nm for 3 minutes under a condition of 810 mW from one side of the alkali-free glass, the laminate is turned over, the photocurable resin composition is irradiated with LED light having a wavelength of 405 nm for 3 minutes under a condition of 810 mW, the laminate is allowed to cool at 23°C for 30 minutes, and a cured product of the photocurable resin composition is released from the alkali-free glass, the PET film, and the silicone sheet to obtain a cured film.

### <Humidity-controlled thermomechanical analysis (humidity-controlled TMA)>

A test piece is obtained by cutting out the cured film into a strip shape having a width of 5 mm and a length of 15 mm, and in a case where a process of maintaining a humidity of 0 %RH for 30 minutes, a process of increasing the humidity from 0 %RH to 90 %RH at a humidity increase rate of 5 %RH/min (humidification step), a process of maintaining the humidity of 90 %RH for 150 minutes, a process of decreasing the humidity from 90 %RH to 0 %RH at a humidity decrease rate of 5 %RH/min (dehumidification step), and a process of maintaining the humidity of 0 %RH for 30 minutes are continuously performed under conditions of a tensile mode, a load of 5 gf, a distance between chucks of 10 mm, a nitrogen atmosphere, and a temperature of 65°C (constant) using a humidity-controlled thermomechanical analysis (humidity-controlled TMA), a humidity swelling ratio in the humidification step is defined as a humidity swelling ratio α1.
[2] The photocurable resin composition according to [1],
   wherein the humidity swelling ratio α1 is -0.40% or more.
[3] The photocurable resin composition according to [1] or [2],
   wherein in a case where a humidity swelling ratio in the dehumidification step is defined as a humidity swelling ratio α2, and in the cured film produced using the photocurable resin composition according to the <cured film preparation conditions>, the humidity swelling ratio α2 measured according to the <humidity-controlled thermomechanical analysis (humidity-controlled TMA)> is 0.00% or less.
[4] The photocurable resin composition according to any one of [1] to [3],
   wherein the photocurable resin composition contains a (meth)acrylate monomer.
[5] The photocurable resin composition according to [4], wherein the (meth)acrylate monomer includes a methacrylate monomer.
[6] The photocurable resin composition according to [4] or [5],
   wherein the (meth)acrylate monomer includes one or two or more selected from the group consisting of a monofunctional (meth)acrylate monomer and a bifunctional or higher functional (meth)acrylate monomer.
[7] The photocurable resin composition according to [6],
   wherein a content of the monofunctional (meth)acrylate monomer is 0 parts by mass or more and 100 parts by mass or less in a case where a total content of the (meth)acrylate monomer is defined as 100 parts by mass.
[8] The photocurable resin composition according to any one of [4] to [7], wherein the (meth)acrylate monomer includes a (meth)acrylate monomer having an alicyclic skeleton.
[9] The photocurable resin composition according to [8],
   wherein the (meth)acrylate monomer having an alicyclic skeleton has one or two or more skeletons selected from the group consisting of an adamantane skeleton, a norbornane skeleton, and a dicyclopentadiene skeleton.
[10] The photocurable resin composition according to [8] or [9],
   wherein a content of the (meth)acrylate monomer having an alicyclic skeleton is 30 parts by mass or more and 100 parts by mass or less in a case where a total content of the (meth)acrylate monomer is defined as 100 parts by mass.
[11] The photocurable resin composition according to any one of [4] to [10],
   wherein the (meth)acrylate monomer includes a (meth)acrylate monomer having a linear hydrocarbon skeleton.
[12] The photocurable resin composition according to any one of [1] to [11],
   wherein the photocurable resin composition further contains a light stabilizer.
[13] The photocurable resin composition according to any one of [1] to [12],
   wherein the photocurable resin composition further contains an antioxidant.
[14] The photocurable resin composition according to any one of [1] to [13],
   wherein the photocurable resin composition further contains a photopolymerization initiator.
[15] The photocurable resin composition according to [14],
   wherein the photopolymerization initiator includes a photoradical polymerization initiator.
[16] The photocurable resin composition according to any one of [1] to [15],
   wherein the photocurable resin composition is capable of being used in a casting method.
[17] The photocurable resin composition according to any one of [1] to [16],
   wherein the photocurable resin composition is capable of being used for one or two or more lenses selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).
[18] An optical molded body comprising:
   a cured product of the photocurable resin composition according to any one of [1] to [17].
[19] The optical molded body according to [18],
   wherein the optical molded body includes a lens.
[20] The optical molded body according to [19],
   wherein the lens includes one or two or more selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).
[21] The optical molded body according to [18],
   wherein the optical molded body includes a cover display.
[22] The optical molded body according to [21],
   wherein the cover display includes one or two or more selected from the group consisting of a cover display for a virtual reality device, a cover display for a mixed reality device, a cover display for an augmented reality device, a cover display for a cross-reality device, and a cover display for a head-mounted display.
[23] The optical molded body according to any one of [18] to [22],
   wherein a maximum thickness portion is 20.0 mm or less.
[24] The optical molded body according to any one of [18] to [23],
   wherein a maximum thickness portion is 1.0 mm or more.
[25] An optical device comprising the optical molded body according to any one of [18] to [24].

### ADVANTAGEOUS EFFECTS OF INVENTION

According to the present invention, it is possible to provide a photocurable resin composition capable of reducing the occurrence of cracks in an optical molded body.

### DESCRIPTION OF EMBODIMENTS

The notation of "(meth)acrylate" in the present specification represents a concept including both acrylate and methacrylate. The same applies to similar notations such as "(meth)acryloyl".

Each component of the present embodiment may be used alone or in combination of two or more kinds thereof. In addition, "to" representing a numerical range represents "or more" and "or less", and includes both the upper limit value and the lower limit value.

### (Photocurable resin composition)

The photocurable resin composition of the present embodiment (hereinafter, also simply referred to as a "resin composition" as appropriate) is a photocurable resin composition that can be used for an optical molded body.

In the photocurable resin composition of the present embodiment, a humidity swelling ratio α1, measured in a cured film produced using the photocurable resin composition according to the following <cured film preparation conditions> and measured according to the following <humidity-controlled thermomechanical analysis (humidity-controlled TMA)> is 1.00% or less.

### <Cured film preparation conditions>

A PET film having a thickness of 100 µm and a size of 100 mm × 100 mm, and a silicone sheet (material: silicone rubber, hardness: 50 degrees) having a thickness of 500 µm and a size of 100 mm × 100 mm with a circular hole having a diameter of 50 mmφ are placed in this order on alkali-free glass having a thickness of 2.0 mm and a size of 100 mm × 100 mm, the circular hole portion is filled with the photocurable resin composition, a PET film having a thickness of 100 µm and a size of 100 mm × 100 mm and alkali-free glass having a thickness of 2.0 mm and a size of 100 mm × 100 mm are further placed in this order thereon, the height is adjusted by placing the laminate on a stainless-steel lab jack, the photocurable resin composition is irradiated with LED light having a wavelength of 405 nm for 3 minutes under a condition of 810 mW from one side of the alkali-free glass, the laminate is turned over, the photocurable resin composition is irradiated with LED light having a wavelength of 405 nm for 3 minutes under a condition of 810 mW, the laminate is allowed to cool at 23°C for 30 minutes, and a cured product of the photocurable resin composition is released from the alkali-free glass, the PET film, and the silicone sheet to obtain a cured film.

### <Humidity-controlled thermomechanical analysis (humidity-controlled TMA)>

A test piece is obtained by cutting out the cured film into a strip shape having a width of 5 mm and a length of 15 mm, and in a case where a process of maintaining a humidity of 0 %RH for 30 minutes, a process of increasing the humidity from 0 %RH to 90 %RH at a humidity increase rate of 5 %RH/min (humidification step), a process of maintaining the humidity of 90 %RH for 150 minutes, a process of decreasing the humidity from 90 %RH to 0 %RH at a humidity decrease rate of 5 %RH/min (dehumidification step), and a process of maintaining the humidity of 0 %RH for 30 minutes are continuously performed under conditions of a tensile mode, a load of 5 gf, a distance between chucks of 10 mm, a nitrogen atmosphere, and a temperature of 65°C (constant) using a humidity-controlled thermomechanical analysis (humidity-controlled TMA), a humidity swelling ratio in the humidification step is defined as a humidity swelling ratio α1.

The photocurable resin composition of the present embodiment has the above-described configuration, and thus it is possible to reduce the occurrence of cracks in the optical molded body obtained from the photocurable resin composition of the present embodiment.

The photocurable resin composition contains, for example, a polymerizable compound. From the viewpoint of further reducing the occurrence of cracks in the optical molded body, the polymerizable compound preferably contains a (meth)acrylate monomer (A).

The properties of the photocurable resin composition are not particularly limited. However, from the viewpoint of suitability for forming an optical molded body by molding using an injection method or a casting method, the photocurable resin composition is preferably in a liquid state.

In addition, from the viewpoint of improving a degree of freedom in designing the optical molded body, the photocurable resin composition is preferably used for molding by a casting method.

Next, specific examples of the constitutional components of the photocurable resin composition will be described.

The photocurable resin composition may be composed of a polymerizable compound, or may contain a component other than the polymerizable compound. The photocurable resin composition may contain one or two or more selected from the group consisting of an antioxidant (B), a photopolymerization initiator (C), and a light stabilizer (D), which will be described later, as specific examples of other components.

### <Polymerizable compound>

The polymerizable compound may be a compound having a polymerizable functional group, and is preferably a compound having a radically polymerizable functional group. From the viewpoint of reducing the occurrence of cracks in the optical molded body, examples of the radically polymerizable functional group include a (meth)acryloyl group. From the viewpoint of reducing the occurrence of cracks in the optical molded body, the polymerizable compound preferably contains a (meth)acrylate monomer (A). From the viewpoint of reducing the coloration of the optical molded body, the (meth)acrylate monomer (A) preferably includes a methacrylate monomer.

### <(Meth)acrylate monomer (A)>

The (meth)acrylate monomer (A) is a compound having a (meth)acryloyl group. The (meth)acrylate monomer (A) is a molecule capable of being bonded to other molecules by the radical polymerization of the (meth)acryloyl group.

From the viewpoint of improving the strength of the optical molded body obtained by the photocurable resin composition, the (meth)acrylate monomer (A) preferably contains one or two or more selected from the group consisting of a monofunctional (meth)acrylate monomer (A1) and a bifunctional or higher functional (meth)acrylate monomer (A2).

From the viewpoint of further reducing the occurrence of cracks in the optical molded body, in a case where the total content of the (meth)acrylate monomer (A) in the photocurable resin composition according to the present embodiment is set to 100 parts by mass, the content of the monofunctional (meth)acrylate monomer (A1) is preferably 0 parts by mass or more and 100 parts by mass or less, more preferably 1 part by mass or more and 100 parts by mass or less, still more preferably 10 parts by mass or more and 100 parts by mass or less, even still more preferably 30 parts by mass or more and 100 parts by mass or less, even still more preferably 50 parts by mass or more and 100 parts by mass or less, even still more preferably 70 parts by mass or more and 100 parts by mass or less, and even still more preferably 75 parts by mass or more and 100 parts by mass or less.

From the viewpoint of further reducing the occurrence of cracks in the optical molded body, in a case where the total content of the (meth)acrylate monomer (A) in the photocurable resin composition according to the present embodiment is set to 100 parts by mass, the content of the bifunctional or higher functional (meth)acrylate monomer (A2) is preferably 0 parts by mass or more and 100 parts by mass or less, more preferably 0 parts by mass or more and 90 parts by mass or less, still more preferably 0 parts by mass or more and 70 parts by mass or less, even still more preferably 0 parts by mass or more and 50 parts by mass or less, even still more preferably 0 parts by mass or more and 30 parts by mass or less, and even still more preferably 0 parts by mass or more and 25 parts by mass or less.

From the viewpoint of further reducing the occurrence of cracks in the optical molded body, the (meth)acrylate monomer (A) preferably includes a (meth)acrylate monomer having an alicyclic skeleton. From the viewpoint of further reducing the occurrence of cracks in the optical molded body, the (meth)acrylate monomer having an alicyclic skeleton more preferably has one or two or more skeletons selected from the group consisting of an adamantane skeleton, a norbornane skeleton, and a dicyclopentadiene skeleton. From the viewpoint of further reducing the occurrence of cracks in the optical molded body, the (meth)acrylate monomer having an alicyclic skeleton further preferably includes one or two or more selected from the group consisting of dicyclopentanyl (meth)acrylate and isobornyl (meth)acrylate.

From the viewpoint of further reducing the occurrence of cracks in the optical molded body, in a case where the total content of the (meth)acrylate monomer (A) in the photocurable resin composition according to the present embodiment is set to 100 parts by mass, the content of the (meth)acrylate monomer having an alicyclic skeleton is preferably 30 parts by mass or more and 100 parts by mass or less, more preferably 40 parts by mass or more and 100 parts by mass or less, still more preferably 45 parts by mass or more and 100 parts by mass or less, even still more preferably 50 parts by mass or more and 100 parts by mass or less, even still more preferably 60 parts by mass or more and 100 parts by mass or less, even still more preferably 70 parts by mass or more and 100 parts by mass or less, even still more preferably 75 parts by mass or more and 100 parts by mass or less, even still more preferably 80 parts by mass or more and 100 parts by mass or less, and even still more preferably 90 parts by mass or more and 100 parts by mass or less.

From the viewpoint of further reducing the occurrence of cracks in the optical molded body, the (meth)acrylate monomer (A) preferably includes a (meth)acrylate monomer having a linear hydrocarbon skeleton, more preferably includes one or two or more selected from the group consisting of 1,12-dodecanediol di(meth)acrylate and dipropylene glycol di(meth)acrylate, and still more preferably includes 1,12-dodecanediol di(meth)acrylate.

### <Monofunctional (meth)acrylate monomer (A1)>

The monofunctional (meth)acrylate monomer (A1) includes, for example, one or two or more selected from the group consisting of an aromatic ring monofunctional (meth)acrylate; an alicyclic monofunctional (meth)acrylate; a chain (or chain-type) monofunctional (meth)acrylate such as a linear monofunctional (meth)acrylate (for example, including a monofunctional (meth)acrylate monomer having a linear hydrocarbon skeleton) and a branched monofunctional (meth)acrylate.

The monofunctional (meth)acrylate monomer (A1) preferably includes one or two or more selected from the group consisting of isobornyl (meth)acrylate, dicyclopentanyl (meth)acrylate (for example, GM81HDA, manufactured by Qualipoly Chemical Co., Ltd.), 3,3,5-trimethylcyclohexyl (meth)acrylate, 4-tert-butylcyclohexyl (meth)acrylate, dicyclopentenyl (meth)acrylate (for example, FA-511AS, manufactured by Hitachi Chemical Co., Ltd.), dicyclopentenyloxyethyl (meth)acrylate, tetrahydrofurfuryl (meth)acrylate, 2-hydroxyethyl (meth)acrylate, 4-hydroxybutyl (meth)acrylate, isobutyl (meth)acrylate, t-butyl (meth)acrylate, isooctyl (meth)acrylate, 2-methoxyethyl (meth)acrylate, methoxytriethylene glycol (meth)acrylate, 2-ethoxyethyl (meth)acrylate, 3-methoxybutyl (meth)acrylate, ethoxyethyl (meth)acrylate, butoxyethyl (meth)acrylate, ethoxydiethylene glycol (meth)acrylate, methoxydihexylethyl (meth)acrylate, ethyldiglycol (meth)acrylate, cyclic trimethylolpropane formal mono(meth)acrylate, imide (meth)acrylate, isoamyl (meth)acrylate, ethoxylated succinic acid (meth)acrylate, trifluoroethyl (meth)acrylate, ω-carboxypolycaprolactone mono(meth)acrylate, cyclohexyl (meth)acrylate, 2-(2-ethoxyethoxy)ethyl (meth)acrylate, stearyl (meth)acrylate, isostearyl (meth)acrylate (for example, S-1800A, manufactured by Shin-Nakamura Chemical Co., Ltd.), diethylene glycol monobutyl ether (meth)acrylate, lauryl (meth)acrylate (for example, LA, manufactured by OSAKA ORGANIC CHEMICAL INDUSTRY LTD.), isodecyl (meth)acrylate, octyl/decyl (meth)acrylate, tridecyl (meth)acrylate, caprolactone (meth)acrylate, ethoxylated (4) nonylphenol (meth)acrylate, methoxypolyethylene glycol (350) mono(meth)acrylate, methoxypolyethylene glycol (550) mono(meth)acrylate, phenoxyethyl (meth)acrylate, benzyl (meth)acrylate, methylphenoxyethyl (meth)acrylate, caprolactone-modified tetrahydrofurfuryl (meth)acrylate, tribromophenyl (meth)acrylate, ethoxylated tribromophenyl (meth)acrylate, 2-phenoxyethyl (meth)acrylate, an ethylene oxide adduct of 2-phenoxyethyl (meth)acrylate, a propylene oxide adduct of 2-phenoxyethyl (meth)acrylate, phenoxydiethylene glycol (meth)acrylate, 2-hydroxy-3-phenoxypropyl (meth)acrylate, 3-methacryloyloxymethylcyclohexene oxide, 3-(meth)acryloyloxymethylcyclohexene oxide, ethoxylated-o-phenylphenol (meth)acrylate (for example, A-LEN-10, manufactured by Shin-Nakamura Chemical Co., Ltd.), 2-methacryloyloxy-2-methyladamantane, and 2-methacryloyloxy-2-ethyladamantane.

From the viewpoint of further reducing the occurrence of cracks in the optical molded body, the monofunctional (meth)acrylate monomer (A1) preferably includes one or two or more selected from the group consisting of ethoxylated-o-phenylphenol (meth)acrylate, dicyclopentanyl (meth)acrylate, and isobornyl (meth)acrylate.

### <Bifunctional or higher functional (meth)acrylate monomer (A2)>

The bifunctional or higher functional (meth)acrylate monomer (A2) preferably includes one or two or more selected from the group consisting of an alicyclic bifunctional (meth)acrylate monomer and a linear bifunctional (meth)acrylate monomer.

The alicyclic bifunctional (meth)acrylate monomer is a bifunctional (meth)acrylate monomer having an alicyclic hydrocarbon structure in the molecular structure. From the viewpoint of improving heat resistance, the number of carbon atoms in the alicyclic hydrocarbon structure is preferably 4 or more and 14 or less, more preferably 5 or more and 12 or less, and still more preferably 6 or more and 10 or less.

The alicyclic hydrocarbon structure may be a saturated hydrocarbon structure or an unsaturated hydrocarbon structure. From the viewpoint of improving heat resistance, the alicyclic hydrocarbon structure is preferably a saturated hydrocarbon structure.

In addition, the alicyclic hydrocarbon structure may be a monocyclic hydrocarbon structure, or may be a polycyclic hydrocarbon structure such as a condensed ring-type hydrocarbon structure or a bridged hydrocarbon structure. The alicyclic bifunctional (meth)acrylate monomer may include a group having the alicyclic hydrocarbon structure in the molecular structure, and preferably includes a divalent group having the alicyclic hydrocarbon structure.

Specific examples of the monocyclic hydrocarbon group include a group having a cycloalkane structure, such as a cyclohexylene group and a cyclohexyl group; and a group having a cycloalkene skeleton, such as a cyclodecatrienediyl group and a cyclodecatrienyl group.

Specific examples of the polycyclic hydrocarbon group include a group having a dicyclopentadiene skeleton, such as a tricyclodecane diyl group, a dicyclopentanyl group, and a dicyclopentenyl group; a group having a norbornane skeleton, such as a norbornane diyl group, an isobornane diyl group, a norbornyl group, and an isobornyl group; and a group having an adamantane skeleton, such as an adamantane diyl group and an adamantyl group.

From the viewpoint of further reducing the occurrence of cracks in the optical molded body, the cyclic hydrocarbon group in the alicyclic bifunctional (meth)acrylate monomer is preferably a group having a dicyclopentadiene skeleton.

In addition, from the viewpoint of reducing the curing shrinkage during the molding of the optical molded body, the alicyclic bifunctional (meth)acrylate monomer preferably includes tricyclodecane dimethanol di(meth)acrylate, more preferably is tricyclodecane dimethanol di(meth)acrylate, and still more preferably is tricyclodecane dimethanol dimethacrylate (for example, DCP, manufactured by Shin-Nakamura Chemical Co., Ltd.).

The linear bifunctional (meth)acrylate monomer is a (meth)acrylate having a linear structure in the molecular structure and having two (meth)acryloyl groups.

From the viewpoint of improving the crack resistance during the molding of the optical molded body, the linear structure preferably includes a divalent linear hydrocarbon group. From the viewpoint of reducing the deviation in the amount of liquid due to the volatilization of the monomer during the molding of the optical molded body, the number of carbon atoms in the divalent linear hydrocarbon group is, for example, 1 or more, preferably 2 or more, and more preferably 4 or more. In addition, from the viewpoint of improving heat resistance, the number of carbon atoms in the divalent linear hydrocarbon group is preferably 20 or less, and more preferably 14 or less.

Specific examples of the linear bifunctional (meth)acrylate monomer include a di(meth)acrylate of an alkanediol.

The linear bifunctional (meth)acrylate monomer preferably includes one or two or more selected from the group consisting of 1,6-hexanediol di(meth)acrylate (for example, A-HD-N, manufactured by Shin-Nakamura Chemical Co., Ltd.; HD-N, manufactured by Shin-Nakamura Chemical Co., Ltd.), 1,9-nonanediol di(meth)acrylate (for example, A-NOD-N, manufactured by Shin-Nakamura Chemical Co., Ltd.; Light Acrylate 1,9ND-A, manufactured by KYOEISHA CHEMICAL Co., Ltd.; NOD-N, manufactured by Shin-Nakamura Chemical Co., Ltd.; Light Acrylate 1,9-ND-M, manufactured by KYOEISHA CHEMICAL Co., Ltd.), 1,10-decanediol di(meth)acrylate (for example, A-DOD-N, manufactured by Shin-Nakamura Chemical Co., Ltd.; DOD-N, manufactured by Shin-Nakamura Chemical Co., Ltd.), 1,12-dodecanediol di(meth)acrylate (for example, DDD, manufactured by Shin-Nakamura Chemical Co., Ltd.; SR262, manufactured by Arkema S.A.), ethylene glycol di(meth)acrylate (for example, SR206NS, manufactured by Arkema S.A.), triethylene glycol di(meth)acrylate (for example, SR272, manufactured by Arkema S.A.), polyethylene glycol di(meth)acrylate (for example, A-400, manufactured by Shin-Nakamura Chemical Co., Ltd.), 1,3-butanediol di(meth)acrylate (for example, BG, manufactured by Shin-Nakamura Chemical Co., Ltd.), and 1,4-butanediol di(meth)acrylate (for example, BD, manufactured by Shin-Nakamura Chemical Co., Ltd.).

From the viewpoint of further reducing the occurrence of cracks in the optical molded body, the bifunctional or higher functional (meth)acrylate monomer (A2) preferably has an alicyclic skeleton. From the viewpoint of further reducing the occurrence of cracks in the optical molded body, the bifunctional or higher functional (meth)acrylate monomer (A2) more preferably includes tricyclodecane dimethanol di(meth)acrylate, and still more preferably includes tricyclodecane dimethanol dimethacrylate.

From the viewpoint of further reducing the occurrence of cracks in the optical molded body, the bifunctional or higher functional (meth)acrylate monomer (A2) preferably has a linear hydrocarbon skeleton. From the viewpoint of further reducing the occurrence of cracks in the optical molded body, the bifunctional or higher functional (meth)acrylate monomer (A2) more preferably includes 1,12-dodecanediol di(meth)acrylate, and still more preferably includes 1,12-dodecanediol dimethacrylate.

### <Antioxidant (B)>

The photocurable resin composition according to the present embodiment may further contain an antioxidant (B). The antioxidant (B) is not particularly limited, and a known antioxidant can be used. The antioxidant (B) includes, for example, one or two or more selected from the group consisting of a phenol-based antioxidant, a phosphorus-based antioxidant, a sulfur-based antioxidant, a hindered amine-based antioxidant, and a thioether-based antioxidant.

Examples of the phenol-based antioxidant include 2,6-di-t-butylhydroxytoluene and pentaerythritol tetrakis[3-(3,5-di-tert-butyl-4-hydroxyphenyl)propionate].

Examples of a commercially available product of the phenol-based antioxidant include ADEKA STAB series AO-20, AO-30, AO-40, AO-50, AO-60, and AO-80 manufactured by ADEKA Corporation.

Examples of the phosphorus-based antioxidant include phosphines such as trialkylphosphine and triarylphosphine, trialkyl phosphite, and triaryl phosphite.

Examples of a commercially available product of the phosphorus-based antioxidant include ADEKA STAB series PEP-4C, PEP-8, PEP-24G, PEP-36, HP-10, 260, 522A, 329K, 1178, 1500, 135A, and 3010 manufactured by ADEKA Corporation.

Examples of sulfur-based antioxidant include dilauryl 3,3-thiodipropionate, dimyristyl 3,3'-thiodipropionate, distearyl 3,3-thiodipropionate, lauryl stearyl 3,3-thiodipropionate, pentaerythritol-tetrakis-(β-lauryl-thio-propionate), 3,9-bis(2-dodecylthioethyl)-2,4,8,10-tetraoxaspiro[5,5]undecane, and the like.

Examples of the hindered amine-based antioxidant include bis(1,2,2,6,6-pentamethyl-4-piperidinyl)sebacate, methyl(1,2,2,6,6-pentamethyl-4-piperidinyl)sebacate, 2,4-bis[N-butyl-N-(1-cyclohexyloxy-2,2,6,6-tetramethylpiperidine-4-yl)amino]-6-(2-hydroxyethylamino)-1,3,5-triazine, decanedioic acid bis(2,2,6,6-tetramethyl-1-(octyloxy)-4-piperidinyl)ester, sebacic acid bis(1,2,2,6,6-pentamethyl-4-piperidyl), and the like.

Examples of a commercially available product of the hindered amine-based antioxidant include hindered amine-based antioxidants such as ADEKA STAB series AL-72 manufactured by ADEKA Corporation and TINUVIN series 111FDL, 123, 144, 152, 292, and 5100 manufactured by BASF.

Examples of the thioether-based antioxidant include 3,3'-thiobispropionic acid ditridecyl and bis[3-(dodecylthio)propionic acid] 2,2-bis[[3-(dodecylthio)-1-oxopropyloxy]methyl]-1,3-propanediyl.

Examples of a commercially available product of the thioether-based antioxidant include ADEKA STAB series AO-26, AO-412S, and AO-503A manufactured by ADEKA Corporation.

From the viewpoint of reducing the coloration of the optical molded body, the antioxidant (B) preferably includes one or two or more selected from the group consisting of a phenol-based antioxidant and a thioether-based antioxidant. From the viewpoint of reducing the coloration of the optical molded body, the antioxidant (B) more preferably includes one or two or more selected from the group consisting of bis[3-(dodecylthio)propionic acid] 2,2-bis[[3-(dodecylthio)-1-oxopropyloxy]methyl]-1,3-propanediyl (for example, ADEKA STAB AO-412S, manufactured by ADEKA Corporation) and pentaerythritol tetrakis[3-(3,5-di-tert-butyl-4-hydroxyphenyl)propionate] (for example, ADEKA STAB AO-60, manufactured by ADEKA Corporation).

From the viewpoint of reducing the coloration of the optical molded body, in a case where the content of the (meth)acrylate monomer (A) is set to 100 parts by mass, the content of the antioxidant (B) in the photocurable resin composition according to the present embodiment is preferably 0.010 parts by mass or more and 10 parts by mass or less, more preferably 0.050 parts by mass or more and 5.0 parts by mass or less, still more preferably 0.10 parts by mass or more and 3.0 parts by mass or less, even more preferably 0.20 parts by mass or more and 2.0 parts by mass or less, and even still more preferably 0.50 parts by mass or more and 1.5 parts by mass or less.

From the viewpoint of reducing the coloration of the optical molded body, in a case where the total amount of solid contents in the photocurable resin composition (the total amount of components remaining as solid substances in a case of being cured into a cured product) is set to 100% by mass, the content of the antioxidant (B) in the photocurable resin composition according to the present embodiment is preferably 0.010% by mass or more and 5.0% by mass or less, more preferably 0.050% by mass or more and 4.0% by mass or less, still more preferably 0.10% by mass or more and 3.0% by mass or less, even still more preferably 0.50% by mass or more and 2.0% by mass or less, and even still more preferably 0.90% by mass or more and 1.0% by mass or less.

### <Photopolymerization initiator (C)>

The photocurable resin composition of the present embodiment may further contain a photopolymerization initiator (C). The photopolymerization initiator (C) is not particularly limited, and a known polymerization initiator can be used.

From the viewpoint of stably forming the optical molded body at a low temperature, the photopolymerization initiator (C) preferably includes a photoradical polymerization initiator. The photoradical polymerization initiator is a compound that generates a radical upon irradiation with ultraviolet rays or visible light.

Examples of the photoradical polymerization initiator include an acylphosphine oxide-based initiator, an oxyphenylacetic acid ester-based initiator, a benzoylformic acid-based initiator, and a hydroxyphenyl ketone-based initiator.

Examples of the photopolymerization initiator (C) include benzophenone, Michler's ketone, 4,4'-bis(diethylamino)benzophenone, xanthone, thioxanthone, isopropylxanthone, 2,4-diethylthioxanthone, 2-ethylanthraquinone, acetophenone, 2-hydroxy-2-methyl-4'-isopropylpropionophenone, isopropylbenzoin ether, isobutylbenzoin ether, 2,2-diethoxyacetophenone, 2,2-dimethoxy-2-phenylacetophenone, camphorquinone, benzanthrone, ethyl 4-dimethylaminobenzoate, isoamyl 4-dimethylaminobenzoate, 4,4'-di(t-butylperoxycarbonyl)benzophenone, 3,4,4'-tri(t-butylperoxycarbonyl)benzophenone, 3,3',4,4'-tetra(t-butylperoxycarbonyl)benzophenone, 3,3',4,4'-tetra(t-hexylperoxycarbonyl)benzophenone, 3,3'-di(methoxycarbonyl)-4,4'-di(t-butylperoxycarbonyl)benzophenone, 3,4'-di(methoxycarbonyl)-4,3'-di(t-butylperoxycarbonyl)benzophenone, 4,4'-di(methoxycarbonyl)-3,3'-di(t-butylperoxycarbonyl)benzophenone, 2-(4'-methoxystyryl)-4,6-bis(trichloromethyl)-s-triazine, 2-(3',4'-dimethoxystyryl)-4,6-bis(trichloromethyl)-s-triazine, 2-(2',4'-dimethoxystyryl)-4,6-bis(trichloromethyl)-s-triazine, 2-(2'-methoxystyryl)-4,6-bis(trichloromethyl)-s-triazine, 2-(4'-pentyloxystyryl)-4,6-bis(trichloromethyl)-s-triazine, 4-[p-N,N-di(ethoxycarbonylmethyl)]-2,6-di(trichloromethyl)-s-triazine, 1,3-bis(trichloromethyl)-5-(2'-chlorophenyl)-s-triazine, 1,3-bis(trichloromethyl)-5-(4'-methoxyphenyl)-s-triazine, 2-(p-dimethylaminostyryl)benzoxazole, 2-(p-dimethylaminostyryl)benzothiazole, 2-mercaptobenzothiazole, 3,3'-carbonylbis(7-diethylaminocoumarin), 2-(o-chlorophenyl)-4,4',5,5'-tetraphenyl-1,2'-biimidazole, 2,2'-bis(2-chlorophenyl)-4,4',5,5'-tetrakis(4-ethoxycarbonylphenyl)-1,2'-biimidazole, 2,2'-bis(2,4-dichlorophenyl)-4,4',5,5'-tetraphenyl-1,2'-biimidazole, 2,2'-bis(2,4-dibromophenyl)-4,4',5,5'-tetraphenyl-1,2'-biimidazole, 2,2'-bis(2,4,6-trichlorophenyl)-4,4',5,5'-tetraphenyl-1,2'-biimidazole, 3-(2-methyl-2-dimethylaminopropionyl)carbazole, 3,6-bis(2-methyl-2-morpholinopropionyl)-9-n-dodecylcarbazole, bis(η5-2,4-cyclopentadiene-1-yl)-bis(2,6-difluoro-3-(1H-pyrrole-1-yl)-phenyl) titanium, 1-hydroxycyclohexyl phenyl ketone, 2-hydroxy-2-methyl-1-phenyl-1-propanone, 1-[4-(2-hydroxyethoxy)-phenyl]-2-hydroxy-2-methyl-1-propanone, 2-hydroxy-1-{4-[4-(2-hydroxy-2-methyl-propionyl)-benzyl]phenyl}-2-methyl-1-propanone, 2-methyl-1-[4-(methylthio)phenyl]-2-morpholino-1-propanone, 2-(dimethylamino)-1-(4-morpholinophenyl)-2-benzyl-1-butanone, 2-(dimethylamino)-2-[(4-methylphenyl)methyl]-1-[4-(4-morpholinyl)phenyl]-1-butanone, oxy-phenyl-acetic acid 2-[2-oxo-2-phenyl-acetoxy-ethoxy]-ethyl ester, oxy-phenyl-acetic acid 2-[2-hydroxy-ethoxy]-ethyl ester, methyl benzoylformate, bis(2,4,6-trimethylbenzoyl)phenylphosphine oxide, 2,4,6-trimethylbenzoyldiphenylphosphine oxide, 2,4,6-trimethylbenzoyldiphenylphosphinic acid ester, 1-[4-(phenylthio)phenyl]-1,2-octanedione 2-(O-benzoyloxime), 1-[9-ethyl-6-(2-methylbenzoyl)-9H-carbazole-3-yl]-ethanone-1-(O-acetyloxime), and the like.

From the viewpoint of further reducing the occurrence of cracks in the optical molded body, the photopolymerization initiator (C) preferably includes a hydroxyphenylketone-based initiator, and more preferably includes 1-hydroxycyclohexyl phenyl ketone (for example, Omnirad 184, manufactured by IGM Resins B.V.).

From the viewpoint of further reducing the occurrence of cracks in the optical molded body, in a case where the content of the (meth)acrylate monomer (A) is set to 100 parts by mass, the content of the photopolymerization initiator (C) in the photocurable resin composition according to the present embodiment is preferably 0.10 parts by mass or more, more preferably 0.50 parts by mass or more, still more preferably 1.0 part by mass or more, even still more preferably 2.0 parts by mass or more, and even still more preferably 3.0 parts by mass or more.

From the viewpoint of improving the uniformity of the thickness of the photocurable resin composition during curing, in a case where the content of the (meth)acrylate monomer (A) is set to 100 parts by mass, the content of the photopolymerization initiator (C) in the photocurable resin composition according to the present embodiment is preferably 10 parts by mass or less, more preferably 8.0 parts by mass or less, still more preferably 6.0 parts by mass or less, even still more preferably 5.0 parts by mass or less, and even still more preferably 4.5 parts by mass or less.

From the viewpoint of further reducing the occurrence of cracks in the optical molded body and the viewpoint of improving the uniformity of the thickness of the photocurable resin composition during curing, in a case where the content of the (meth)acrylate monomer (A) is set to 100 parts by mass, the content of the photopolymerization initiator (C) in the photocurable resin composition according to the present embodiment is preferably 0.10 parts by mass or more and 10 parts by mass or less, more preferably 0.50 parts by mass or more and 8.0 parts by mass or less, still more preferably 1.0 part by mass or more and 6.0 parts by mass or less, even still more preferably 2.0 parts by mass or more and 5.0 parts by mass or less, and even still more preferably 3.0 parts by mass or more and 4.5 parts by mass or less.

From the viewpoint of further reducing the occurrence of cracks in the optical molded body, in a case where the total amount of solid contents in the photocurable resin composition (the total amount of components remaining as solid substances in a case of being cured into a cured product) is set to 100% by mass, the content of the photopolymerization initiator (C) in the photocurable resin composition according to the present embodiment is preferably 0.10% by mass or more and 10% by mass or less, more preferably 1.0% by mass or more and 8.0% by mass or less, still more preferably 2.0% by mass or more and 6.0% by mass or less, even still more preferably 3.0% by mass or more and 5.0% by mass or less, and even still more preferably 3.5% by mass or more and 4.0% by mass or less.

### <Light Stabilizer (D)>

The photocurable resin composition of the present embodiment may further include a light stabilizer (D). The light stabilizer (D) is not particularly limited, and a known light stabilizer can be used. The photocurable resin composition can improve the coloring resistance by containing the light stabilizer (D).

From the viewpoint of further improving the coloring resistance, the light stabilizer (D) preferably includes a hindered amine-based light stabilizer.

Examples of the hindered amine-based light stabilizer include methacrylic acid (1,2,2,6,6-pentamethyl-piperidin-4-yl), decanedioic acid bis(2,2,6,6-tetramethyl-1(octyloxy)-4-piperidinyl) ester, a reaction product of 1,1-dimethylethyl hydroperoxide and octane (70% by mass), and polypropylene (30% by mass), bis(1,2,2,6,6-pentamethyl-4-piperidyl)[[3,5-bis(1,1-dimethylethyl)-4-hydroxyphenyl]methyl]butylmalonate, a mixture of bis(1,2,2,6,6-pentamethyl-4-piperidyl)sebacate and methyl-1,2,2,6,6-pentamethyl-4-piperidyl sebacate, bis(2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, a mixture of 2,2,6,6-tetramethyl-4-piperidyl-1,2,3,4-butanetetracarboxylate and tridecyl-1,2,3,4-butanetetracarboxylate, and a mixture of 1,2,2,6,6-pentamethyl-4-piperidyl-1,2,3,4-butanetetracarboxylate and tridecyl-1,2,3,4-butanetetracarboxylate.

From the viewpoint of further improving the coloring resistance, the light stabilizer (D) preferably includes 1,2,2,6,6-pentamethyl-4-piperidyl methacrylate (for example, ADEKA STAB LA-82, manufactured by ADEKA Corporation).

From the viewpoint of the coloring resistance of the optical molded body, in a case where the total amount of solid contents in the photocurable resin composition (the total amount of components remaining as solid substances in a case of being cured into a cured product) is set to 100% by mass, the content of the light stabilizer (D) in the photocurable resin composition according to the present embodiment is preferably 0.0010% by mass or more, more preferably 0.0050% by mass or more, still more preferably 0.010% by mass or more, even still more preferably 0.050% by mass or more, and even still more preferably 0.090% by mass or more.

From the viewpoint of reducing the bleeding-out, in a case where the total amount of solid contents in the photocurable resin composition (the total amount of components remaining as solid substances in a case of being cured into a cured product) is set to 100% by mass, the content of the light stabilizer (D) in the photocurable resin composition according to the present embodiment is preferably 1.00% by mass or less, more preferably 0.60% by mass or less, still more preferably 0.50% by mass or less, even still more preferably 0.40% by mass or less, and even still more preferably 0.30% by mass or less.

From the viewpoint of the coloring resistance of the optical molded body and the viewpoint of reducing the bleeding-out, in a case where the total amount of solid contents in the photocurable resin composition (the total amount of components remaining as solid substances in a case of being cured into a cured product) is set to 100% by mass, the content of the light stabilizer (D) in the photocurable resin composition according to the present embodiment is preferably 0.0010% by mass or more and 1.00% by mass or less, more preferably 0.0050% by mass or more and 0.60% by mass or less, still more preferably 0.010% by mass or more and 0.50% by mass or less, even still more preferably 0.050% by mass or more and 0.40% by mass or less, and even still more preferably 0.090% by mass or more and 0.30% by mass or less.

### <Other components>

The photocurable resin composition may contain one or two or more selected from the group consisting of a filler, a curing accelerator, a plasticizer, a heat stabilizer, a flame retardant, an antistatic agent, an antifoaming agent, a silane coupling agent, an ultraviolet absorber, a surfactant, and a leveling agent as specific examples of other components other than the polymerizable compound (for example, the (meth)acrylate monomer (A)), the antioxidant (B), the photopolymerization initiator (C), and the light stabilizer (D).

### <Method for manufacturing photocurable resin composition>

The photocurable resin composition according to the present embodiment can be obtained by mixing the polymerizable compound (for example, the (meth)acrylate monomer (A)) and other components such as the antioxidant (B), the photopolymerization initiator (C), or the light stabilizer (D) as necessary by a known method in the related art.

### <Physical properties of photocurable resin composition>

Next, the physical properties of the photocurable resin composition will be described.

Regarding the photocurable resin composition according to the present embodiment, a humidity swelling ratio α1, which is measured according to the following <humidity-controlled thermomechanical analysis (humidity-controlled TMA)> in a cured film produced using the photocurable resin composition according to the following <cured film preparation conditions>, will be described.

From the viewpoint of reducing the occurrence of cracks in the optical molded body, the humidity swelling ratio α1 is preferably 1.00% or less, more preferably 0.70% or less, still more preferably 0.50% or less, even still more preferably 0.40% or less, even still more preferably 0.30% or less, even still more preferably 0.20% or less, and even still more preferably 0.15% or less.

From the viewpoint of further reducing the occurrence of cracks in the optical molded body, the humidity swelling ratio α1 is preferably -0.40% or more, more preferably -0.30% or more, still more preferably -0.20% or more, even still more preferably -0.15% or more, even still more preferably -0.10% or more, even still more preferably -0.05% or more, and even still more preferably 0.00% or more.

From the viewpoint of further reducing the occurrence of cracks in the optical molded body, the humidity swelling ratio α1 is preferably -0.40% or more and 1.00% or less, more preferably -0.30% or more and 0.70% or less, still more preferably -0.20% or more and 0.50% or less, even still more preferably -0.15% or more and 0.40% or less, even still more preferably -0.10% or more and 0.30% or less, even still more preferably -0.05% or more and 0.20% or less, and even still more preferably 0.00% or more and 0.15% or less.

### <Cured film preparation conditions>

A PET film having a thickness of 100 µm and a size of 100 mm × 100 mm, and a silicone sheet having a thickness of 500 µm, a size of 100 mm × 100 mm, and a circular hole having a diameter of 50 mmφ (material: silicone rubber, hardness: 50 degrees) are placed in this order on alkali-free glass having a thickness of 2.0 mm and a size of 100 mm × 100 mm. Next, the circular hole portion is filled with the photocurable resin composition, and then a PET film having a thickness of 100 µm and a size of 100 mm × 100 mm and alkali-free glass having a thickness of 2.0 mm and a size of 100 mm × 100 mm are further placed in this order thereon. Next, the laminate is placed on a lab jack made of SUS, and the height is adjusted. Next, the photocurable resin composition is irradiated with LED light having a wavelength of 405 nm for 3 minutes under a condition of 810 mW from one side of the alkali-free glass, and then turned over and irradiated with LED light having a wavelength of 405 nm for 3 minutes under a condition of 810 mW. After the irradiation with the LED light, the laminate is allowed to cool at 23°C for 30 minutes, and the cured product is released from the alkali-free glass, the PET film, and the silicone sheet to obtain a cured film.

Here, more specifically, the cured film production conditions of the photocurable resin composition according to the present embodiment can adopt the conditions described in Examples.

### <Humidity-controlled thermomechanical analysis (humidity-controlled TMA)>

The cured film is cut into a strip shape having a width of 5 mm and a length of 15 mm to obtain a test piece. Humidity-controlled thermomechanical analysis is performed on the test piece using a humidity-controlled thermomechanical analysis (humidity-controlled TMA) in a tensile mode under conditions of a load of 5 gf, a distance between chucks of 10 mm, a nitrogen atmosphere, and a temperature of 65°C (constant). The humidity-controlled thermomechanical analysis is continuously performed through the following processes S1 to S5. The humidity swelling ratio in the humidification step is defined as a humidity swelling ratio α1.
(S1) Process of maintaining a humidity of 0 %RH for 30 minutes
(S2) Process of humidifying the humidity from 0 %RH to 90 %RH at a humidity increase rate of 5 %RH/min (humidification step)
(S3) Process of maintaining a humidity of 90 %RH for 150 minutes
(S4) Process of dehumidifying the humidity from 90 %RH to 0 %RH at a humidity decrease rate of 5 %RH/min (dehumidification step)
(S5) Process of maintaining a humidity of 0 %RH for 30 minutes

Here, in the present embodiment, the <humidity-controlled thermomechanical analysis (humidity-controlled TMA)> can be more specifically performed according to the method described in Examples.

Next, in the cured film produced according to the <cured film preparation conditions> using the photocurable resin composition, a humidity swelling ratio α2 measured according to the <humidity-controlled thermomechanical analysis (humidity-controlled TMA)> will be described.

The humidity swelling ratio in the dehumidification step is defined as a humidity swelling ratio α2.

From the viewpoint of further reducing the occurrence of cracks in the optical molded body, the humidity swelling ratio α2 is preferably 0.00% or less, more preferably -0.010% or less, still more preferably -0.030% or less, even still more preferably -0.050% or less, even still more preferably -0.10% or less, even still more preferably -0.15% or less, and even still more preferably -0.20% or less.

The lower limit of the humidity swelling ratio α2 is not particularly limited, but from the viewpoint of further reducing the occurrence of cracks in the optical molded body, it is, for example, -1.00% or more, for example, -0.90% or more, for example, -0.80% or more, for example, -0.70% or more, for example, -0.60% or more, for example, -0.55% or more, and for example, -0.50% or more.

From the viewpoint of further reducing the occurrence of cracks in the optical molded body, the humidity swelling ratio α2 is preferably -1.00% or more and 0.00% or less, more preferably -0.90% or more and -0.010% or less, still more preferably -0.80% or more and -0.030% or less, even still more preferably -0.70% or more and -0.050% or less, even still more preferably -0.60% or more and -0.10% or less, even still more preferably -0.55% or more and -0.15% or less, and even still more preferably -0.50% or more and -0.20% or less.

### <Uses of photocurable resin composition>

Next, the uses of the photocurable resin composition will be described.

Since the photocurable resin composition of the present embodiment can reduce the occurrence of cracks in the optical molded body, it can be used in methods of forming an optical molded body, such as an injection molding method, a compression molding method, an injection compression molding method, an extrusion molding method, a solution casting method, and a casting method. In particular, the photocurable resin composition according to the present embodiment can be used in a casting method.

Since the photocurable resin composition of the present embodiment can reduce the occurrence of cracks in the optical molded body, the uses of the optical molded body molded from the photocurable resin composition are not particularly limited, and it can be used for various applications.

The photocurable resin composition of the present embodiment can be used, for example, preferably for a lens. The lens includes, for example, one or two or more selected from the group consisting of a spherical lens, an aspherical lens, a biconvex lens, a plano-convex lens, a convex meniscus lens, a biconcave lens, a plano-concave lens, and a concave meniscus lens.

The photocurable resin composition of the present embodiment can be used, for example, more preferably for one or two or more lenses selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

The photocurable resin composition of the present embodiment can be used, for example, preferably for a cover for a display (hereinafter, also referred to as a cover display). The cover display includes, for example, one or two or more selected from the group consisting of a front surface cover display and a full-surface cover display.

The photocurable resin composition of the present embodiment can be used, for example, more preferably for one or two or more cover displays selected from the group consisting of a cover display for a virtual reality device (cover display for VR device), a cover display for a mixed reality device (cover display for MR device), a cover display for an augmented reality device (cover display for AR device), a cover display for a cross-reality device (cover display for xR device), and a cover display for a head-mounted display (cover display for HMD).

### (Optical molded body)

The optical molded body according to the present embodiment includes the cured product of the photocurable resin composition according to the present embodiment. The optical molded body according to the present embodiment can be produced using the photocurable resin composition according to the present embodiment. The optical molded body can be manufactured from the photocurable resin composition of the present embodiment by any method such as an injection molding method, a compression molding method, an injection compression molding method, an extrusion molding method, a solution casting method, and a casting method.

The optical molded body according to the present embodiment includes a lens. The lens includes, for example, one or two or more selected from the group consisting of a spherical lens, an aspherical lens, a biconvex lens, a plano-convex lens, a convex meniscus lens, a biconcave lens, a plano-concave lens, and a concave meniscus lens.

The lens of the present embodiment includes one or two or more selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

The optical molded body of the present embodiment includes a cover for a display (cover display). The cover display includes, for example, one or two or more selected from the group consisting of a front surface cover display and a full-surface cover display.

The cover display of the present embodiment includes one or two or more selected from the group consisting of a cover display for a virtual reality device (cover display for a VR device), a cover display for a mixed reality device (cover display for an MR device), a cover display for an augmented reality device (cover display for an AR device), a cover display for a cross-reality device (cover display for an xR device), and a cover display for a head-mounted display (cover display for an HMD).

The maximum thickness portion of the optical molded body is a portion of the optical molded body where the thickness of the optical member is maximum. The position of the maximum thickness portion of the optical molded body is not particularly limited, and can be appropriately set according to the use application and the like.

For example, in the optical molded body of the present embodiment, the maximum thickness portion is preferably 1.0 mm or more, the maximum thickness portion is more preferably 1.1 mm or more, the maximum thickness portion is still more preferably 1.2 mm or more, the maximum thickness portion is even still more preferably 1.5 mm or more, the maximum thickness portion is even still more preferably 2.0 mm or more, the maximum thickness portion is even still more preferably 3.0 mm or more, the maximum thickness portion is even still more preferably 4.0 mm or more, and the maximum thickness portion is even still more preferably 5.0 mm or more.

For example, in the optical molded body of the present embodiment, the maximum thickness portion is preferably 20.0 mm or less, the maximum thickness portion is more preferably 19.9 mm or less, the maximum thickness portion is still more preferably 19.8 mm or less, the maximum thickness portion is even still more preferably 19.5 mm or less, the maximum thickness portion is even still more preferably 18.0 mm or less, the maximum thickness portion is even still more preferably 17.0 mm or less, the maximum thickness portion is even still more preferably 16.0 mm or less, and the maximum thickness portion is even still more preferably 15.0 mm or less.

For example, in the optical molded body of the present embodiment, the maximum thickness portion is preferably 1.0 mm or more and 20.0 mm or less, the maximum thickness portion is more preferably 1.1 mm or more and 19.9 mm or less, the maximum thickness portion is still more preferably 1.2 mm or more and 19.8 mm or less, the maximum thickness portion is even still more preferably 1.5 mm or more and 19.5 mm or less, the maximum thickness portion is even still more preferably 2.0 mm or more and 19.0 mm or less, the maximum thickness portion is even still more preferably 3.0 mm or more and 18.0 mm or less, the maximum thickness portion is even still more preferably 4.0 mm or more and 17.0 mm or less, the maximum thickness portion is even still more preferably 5.0 mm or more and 16.0 mm or less, and the maximum thickness portion is even still more preferably 5.0 mm or more and 15.0 mm or less.

The photocurable resin composition of the present embodiment can reduce the occurrence of cracks in the optical molded body, and thus can also be applied to an optical molded body having a thickness of 1.0 mm or more.

### (Optical device)

The optical device according to the present embodiment includes the optical molded body according to the present embodiment. The type of the optical device of the present embodiment is not particularly limited. Examples of the optical device of the present embodiment include a virtual reality device (VR device), a mixed reality device (MR device), an augmented reality device (AR device), a cross-reality device (xR device), and a head-mounted display (HMD device).

The embodiments according to the present invention have been described above. However, these are examples of the present invention, and various configurations other than the above can be adopted.

In addition, the present invention is not limited to the above-described embodiments, and modifications, improvements, and the like within a range that does not impair the effects of the present invention are included in the present invention. Examples

Hereinafter, the present embodiment will be described in detail with reference to Examples and the like. The present embodiment is not limited to the description of these examples.

First, the materials used in each example are shown.
· Polymerizable compound: (meth)acrylate monomer (A)
   Monofunctional (meth)acrylate monomer (A1) 1: OPPEOA (o-Phenylphenoxyethyl acrylate, manufactured by Qualipoly Chemical Co., Ltd., monofunctional aromatic ring acrylate monomer)
   Monofunctional (meth)acrylate monomer (A1) 2: FA513AS (dicyclopentanyl acrylate, manufactured by Resonac Holdings Corporation, monofunctional alicyclic acrylate monomer)
   Monofunctional (meth)acrylate monomer (A1) 3: GM81HDA (dicyclopentanyl methacrylate, manufactured by Qualipoly Chemical Co., Ltd., monofunctional alicyclic methacrylate monomer)
   Monofunctional (meth)acrylate monomer (A1) 4: Light Ester IB-X (isobornyl methacrylate, manufactured by KYOEISHA CHEMICAL Co., LTD., monofunctional alicyclic methacrylate monomer) (hereinafter, also referred to as IBX)
   Bifunctional or higher functional (meth)acrylate monomer (A2) 1: DCP (tricyclodecane dimethanol dimethacrylate, manufactured by Shin-Nakamura Chemical Co., Ltd., bifunctional alicyclic methacrylate)
   Bifunctional or higher functional (meth)acrylate monomer (A2) 2: DDD (1,12-dodecanediol dimethacrylate, manufactured by Shin-Nakamura Chemical Co., Ltd., bifunctional linear methacrylate)
   Bifunctional or higher functional (meth)acrylate monomer (A2) 3: SR508NS (dipropylene glycol diacrylate, manufactured by Arkema S.A., bifunctional linear acrylate)
· Antioxidant (B)
   Antioxidant 1: Thioether-based antioxidant (bis[3-(dodecylthio)propionic acid]2,2-bis[[3-(dodecylthio)-1-oxopropyloxy]methyl]-1,3-propanediyl, manufactured by ADEKA Corporation, product name: ADEKA STAB AO-412S) (hereinafter, also referred to as AO-412S)
   Antioxidant 2: phenol-based antioxidant (pentaerythritol tetrakis[3-(3,5-di-tert-butyl-4-hydroxyphenyl)propionate], manufactured by ADEKA Corporation, product name: ADEKA STAB AO-60) (hereinafter, also referred to as AO-60)
· Photopolymerization initiator (C)
   Photopolymerization initiator 1: photoradical polymerization initiator (1-hydroxycyclohexyl phenyl ketone, manufactured by IGM Resins B.V., product name: Omnirad 184)
   Photopolymerization initiator 2: photoradical polymerization initiator (2,4,6-trimethylbenzoyldiphenylphosphine oxide, manufactured by IGM Resins B.V., product name: Omnirad TPO H)
· Light stabilizer (D)
   Light stabilizer 1: hindered amine-based light stabilizer (methacrylic acid 1,2,2,6,6-pentamethyl-4-piperidyl, manufactured by ADEKA Corporation, product name: ADEKA STAB LA-82) (hereinafter, also referred to as LA-82)

### (Examples 1 to 6 and Comparative Example 1)

Each component was blended to have the blending composition shown in Table 1, thereby obtaining a liquid photocurable resin composition. The unit of the blending composition in Table 1 is parts by mass.

Physical properties of the photocurable resin composition or the cured product thereof obtained in each example were measured by the following methods. The measurement results are shown in Table 1.

### <Measurement of humidity swelling ratio α1>

In a cured film produced using the photocurable resin composition of each example according to the following <cured film preparation conditions>, a humidity swelling ratio α1 was measured according to the following <humidity-controlled thermomechanical analysis (humidity-controlled TMA)>.

### <Cured film preparation conditions>

A PET film (no mold release treatment, manufactured by Teijin Ltd., product name: Merinax S) having a thickness of 100 µm and a size of 100 mm × 100 mm, and a silicone sheet (material: silicone rubber, hardness: 50 degrees) having a thickness of 500 µm and a size of 100 mm × 100 mm with a circular hole having a diameter of 50 mmφ were placed in this order on alkali-free glass (product name: JIS R 3202 glass plate, manufactured by Testpiece Co., Ltd.) having a thickness of 2.0 mm and a size of 100 mm × 100 mm. The circular hole portion of the silicone sheet was filled with the photocurable resin composition, and then a PET film (no mold release treatment, manufactured by Teijin Ltd., product name: Merinax S) having a thickness of 100 µm and a size of 100 mm × 100 mm and alkali-free glass (product name: JIS R 3202 glass plate, manufactured by Testpiece Co., Ltd.) having a thickness of 2.0 mm and a size of 100 mm × 100 mm were further placed in this order thereon. At this time, it was confirmed that no air bubbles were present. Hereinafter, a laminate in which a PET film and a silicone sheet are placed on the above-described alkali-free glass, the circular hole portion of the silicone sheet is filled with a photocurable resin composition, and a PET film and an alkali-free glass are further placed thereon may be referred to as a laminate.

The obtained laminate was placed on an stainless-steel lab jack to adjust the height, and using an LED light irradiation device (manufactured by CCS, Inc., product name: 405 nm-120 mm air-cooled batch type irradiation device, model number: HLDL-120505-NWPS), the photocurable resin composition was irradiated with LED light having a wavelength of 405 nm for 3 minutes under a condition of 810 mW from above the alkali-free glass. Thereafter, the laminate was turned over, and irradiated with LED light having a wavelength of 405 nm for 3 minutes under a condition of 810 mW. After the irradiation with LED light, the laminate was allowed to cool at 23°C for 30 minutes. After cooling, the cured product of the photocurable resin composition was released from the alkali-free glass and the silicone sheet to obtain a cured film of the photocurable resin composition.

The irradiation intensity of the LED light was measured using an ultraviolet integrating actinometer (product name: UIT-250, manufactured by Ushio Inc.).

### <Humidity-controlled thermomechanical analysis (humidity-controlled TMA)>

The cured film was cut into a strip shape having a width of 5 mm and a length of 15 mm to obtain a test piece. Humidity-controlled thermomechanical analysis was performed on the test piece using a humidity-controlled thermomechanical analysis (humidity-controlled TMA) in the order of the following <measurement step of humidity-controlled TMA> according to the following <measurement conditions of humidity-controlled TMA>.

### <Measurement conditions of humidity-controlled TMA>

Device: thermomechanical analyzer (product name: TMA 4000SE, manufactured by NETZSCH Japan K.K.)
Test mode: tensile mode
Load: 5 gf
Distance between chucks: 10 mm
Atmosphere: nitrogen atmosphere
Temperature: 65°C (constant)

### <Measurement step of humidity-controlled TMA>

The following steps S1 to S5 were continuously performed. The humidity swelling ratio in the following humidification step was defined as a humidity swelling ratio α1 [%]. In addition, the humidity swelling ratio in the following dehumidification step was defined as a humidity swelling ratio α2 [%].
(S1) Process of maintaining a humidity of 0 %RH for 30 minutes
(S2) Process of humidifying the humidity from 0 %RH to 90 %RH at a humidity increase rate of 5 %RH/min (humidification step)
(S3) Process of maintaining a humidity of 90 %RH for 150 minutes
(S4) Process of dehumidifying the humidity from 90 %RH to 0 %RH at a humidity decrease rate of 5 %RH/min (dehumidification step)
(S5) Process of maintaining a humidity of 0 %RH for 30 minutes

### <Measurement of humidity swelling ratio α2>

In a cured film produced using the photocurable resin composition of each example according to the <cured film preparation conditions>, a humidity swelling ratio α2 was measured according to the <humidity-controlled thermomechanical analysis (humidity-controlled TMA)>.

### <Evaluation of presence or absence of crack>

An optical molded body was produced according to the following <preparation conditions of optical molded body> using the photocurable resin composition of each example. An AR film was vapor-deposited on the prepared optical molded body according to <vapor deposition method of AR film> below. Next, the optical molded body on which the AR film was vapor-deposited was subjected to the following <environmental test>. Thereafter, the appearance of the AR film of the optical molded body was visually observed to evaluate the presence or absence of cracks. This evaluation was performed for n = 15.

A case where the number of samples in which cracks occurred in the AR film of the optical molded body was 0 was evaluated as A, a case where the number of samples in which cracks occurred in the AR film of the optical molded body was 1 or more and 3 or less was evaluated as B, and a case where the number of samples in which cracks occurred in the AR film of the optical molded body was 4 or more was evaluated as C.

### <Preparation conditions of optical molded body>

An optical molded body was produced from the photocurable resin composition using a tape mold method according to the following <tape mold conditions>.

A pair of glass molds were installed at a predetermined interval. A tape was attached to the outer peripheral surface of these glass molds along the circumferential direction to seal the space between the pair of glass molds. Next, an injection nozzle was inserted into the sealed space, and the sealed space was filled with the photocurable resin composition by injecting the photocurable resin composition through the injection nozzle. In this case, care was taken to prevent air bubbles from entering the sealed space. Thereafter, in a state where the concave surfaces of the pair of glass molds were directed to an LED light irradiation device (manufactured by CCS, product name: 405 nm-120 mm air-cooled batch type irradiation device, model number: HLDL-120505-NWPS), the photocurable resin composition was irradiated with LED light having a wavelength of 405 nm for 3 minutes under a condition of 810 mW using the LED light irradiation device from above the pair of glass molds. Next, the pair of glass molds were turned over to direct the convex surfaces of the pair of glass molds to the LED light irradiation device. Subsequently, in a state where the convex surfaces of the pair of glass molds were directed to the LED light irradiation device, the photocurable resin composition was irradiated with LED light having a wavelength of 405 nm for 3 minutes under a condition of 810 mW using the LED light irradiation device from above the pair of glass molds. After irradiation with LED light, the cured product of the photocurable resin composition was allowed to cool at 23°C for 30 minutes. After cooling, the tape was peeled off and the optical molded body was released from the glass mold to obtain an optical molded body.

The irradiation intensity of the LED light was measured using an ultraviolet integrating actinometer (product name: UIT-250, manufactured by Ushio Inc.).

### <Tape mold conditions>

### · Pair of glass molds

Spherical glass mold A and spherical glass mold B disposed such that a center line of the spherical glass mold A and a center line of the spherical glass mold B overlapped each other and a concave surface of the spherical glass mold A and a convex surface of the spherical glass mold B faced each other
· Spherical glass mold A: spherical glass mold with both surfaces polished, having a convex surface curvature radius of 243 mm, a concave surface curvature radius of 253 mm, a thickness of 4.8 mm, and a diameter of 81 mmφ
· Spherical glass mold B: spherical glass mold with both surfaces polished, having a convex surface curvature radius of 250 mm, a concave surface curvature radius of 216 mm, a thickness of 3.6 mm, and a diameter of 81 mmφ
   Interval between glass molds: 3 mm
   Tape: SLION TAPE 6263, manufactured by SLION TECH CO., LTD.

### <Vapor deposition method of AR film>

The size of the optical molded body was adjusted to a diameter of 75 mmφ. An AR film was vapor-deposited on the convex surface of the optical molded body of which the size was adjusted.

The AR film was vapor-deposited using an AR vapor deposition device (manufactured by Optotech Co., Ltd.). A ZrO₂ film of 32.5 nm, a SiO₂ film of 49.7 nm, a TiO₂ film of 225.3 nm, a SiO₂ film of 164.5 nm, and a hydrophobic film of 7.0 nm were deposited in this order on the convex surface of the optical molded body. During the vapor-deposition, the temperature was controlled to 65 ± 5°C and the degree of vacuum was controlled to 5.0 × 10⁻⁴ Pa or less. Excel CV Pill 1110 (manufactured by Optotech Co., Ltd.) was used for the hydrophobic film.

### <Environmental test>

The optical molded body on which the AR film was vapor-deposited was placed in a constant temperature and humidity tank at 65°C and 90 %RH. After 500 hours from the placement in the constant temperature and humidity tank, the optical molded body was taken out from the constant temperature and humidity tank.

### [Table 1]

**Table 1**

| | | | | | | Exam ple 1 | Exam ple 2 | Exam ple 3 | Exam ple 4 | Exam ple 5 | Exam ple 6 | Compara tive Example 1 |
|---|---|---|---|---|---|---|---|---|---|---|---|---|
| Blendin g composi tion | (Meth) acr ylate monomer | Monofunct ional | Aromat ic rina | Acrylate | OPPE OA | 0 | 0 | 0 | 50 | 0 | 0 | 0 |
| | | | Alicyc lic | Acrylate | FA51 3AS | 0 | 0 | 0 | 0 | 0 | 80 | 0 |
| | | | Alicyc lic | Methacry late | GM81 HDA | 0 | 80 | 80 | 0 | 0 | 0 | 0 |
| | | | Alicyc lic | Methacry late | IBX | 0 | 0 | 20 | 0 | 0 | 0 | 0 |
| | | Bifunctional or higher functional | Linear | Methacry late | DDD | 0 | 20 | 0 | 0 | 100 | 0 | 0 |
| | | | Alicyclic | Methacry late | DCP | 100 | 0 | 0 | 50 | 0 | 20 | 0 |
| | | | Linear | Acrylate | SR50 8NS | 0 | 0 | 0 | 0 | 0 | 0 | 100 |
| | Antioxidant | | | | AO-412S | 0.50 | 0.50 | 0.50 | 0.50 | 0.50 | 0.50 | 0.50 |
| | | | | | AO-60 | 0.50 | 0.50 | 0.50 | 0.50 | 0.50 | 0.50 | 0.50 |
| | Photopolymerization initiator | | | | Omni rad 184 | 4. 0 | 4. 0 | 4. 0 | 4. 0 | 4. 0 | 4. 0 | 0.0 |
| | | | | | Omni rad TPO H | 0.0 | 0.0 | 0. 0 | 0.0 | 0.0 | 0.0 | 1.5 |
| | Light stabilizer | | | | LA-82 | 0.10 | 0.10 | 0.10 | 0.00 | 0.00 | 0.00 | 0.10 |
| Physical property | Humidity swelling ratio α1 [%] | | | | | 0.25 | 0.42 | 0.13 | 0.29 | 0.31 | -0.44 | 1.41 |
| | Humidity swelling ratio α2 [%] | | | | | -0.25 | -0.04 | -0.06 | -0.32 | -0.15 | -0.24 | -1.01 |
| | Presence or absence of crack | | | | | A | A | A | A | A | B | C |

Priority is claimed on Japanese Patent Application No. 2024-012799, filed January 31, 2024, and Japanese Patent Application No. 2024-069302, filed April 22, 2024, the disclosures of which are incorporated herein in its entirety by reference.

## Claims

1. A photocurable resin composition capable of being used for an optical molded body,
wherein a humidity swelling ratio α1, measured in a cured film produced using the photocurable resin composition according to the following <cured film preparation conditions> and measured according to the following <humidity-controlled thermomechanical analysis (humidity-controlled TMA)> is 1.00% or less.
<Cured film preparation conditions>
A PET film having a thickness of 100 µm and a size of 100 mm × 100 mm, and a silicone sheet (material: silicone rubber, hardness: 50 degrees) having a thickness of 500 µm and a size of 100 mm × 100 mm with a circular hole having a diameter of 50 mmφ are placed in this order on alkali-free glass having a thickness of 2.0 mm and a size of 100 mm × 100 mm, the circular hole portion is filled with the photocurable resin composition, a PET film having a thickness of 100 µm and a size of 100 mm × 100 mm and alkali-free glass having a thickness of 2.0 mm and a size of 100 mm × 100 mm are further placed in this order thereon, the height is adjusted by placing the laminate on a stainless-steel lab jack, the photocurable resin composition is irradiated with LED light having a wavelength of 405 nm for 3 minutes under a condition of 810 mW from one side of the alkali-free glass, the laminate is turned over, the photocurable resin composition is irradiated with LED light having a wavelength of 405 nm for 3 minutes under a condition of 810 mW, the laminate is allowed to cool at 23°C for 30 minutes, and a cured product of the photocurable resin composition is released from the alkali-free glass, the PET film, and the silicone sheet to obtain a cured film.
<Humidity-controlled thermomechanical analysis (humidity-controlled TMA)>
A test piece is obtained by cutting out the cured film into a strip shape having a width of 5 mm and a length of 15 mm, and in a case where a process of maintaining a humidity of 0 %RH for 30 minutes, a process of increasing the humidity from 0 %RH to 90 %RH at a humidity increase rate of 5 %RH/min (humidification step), a process of maintaining the humidity of 90 %RH for 150 minutes, a process of decreasing the humidity from 90 %RH to 0 %RH at a humidity decrease rate of 5 %RH/min (dehumidification step), and a process of maintaining the humidity of 0 %RH for 30 minutes are continuously performed under conditions of a tensile mode, a load of 5 gf, a distance between chucks of 10 mm, a nitrogen atmosphere, and a temperature of 65°C (constant) using a humidity-controlled thermomechanical analysis (humidity-controlled TMA), a humidity swelling ratio in the humidification step is defined as a humidity swelling ratio α1.

2. The photocurable resin composition according to Claim 1,
wherein the humidity swelling ratio α1 is -0.40% or more.

3. The photocurable resin composition according to Claim 1 or 2,
wherein in a case where a humidity swelling ratio in the dehumidification step is defined as a humidity swelling ratio α2, and in the cured film produced using the photocurable resin composition according to the <cured film preparation conditions>, the humidity swelling ratio α2 measured according to the <humidity-controlled thermomechanical analysis (humidity-controlled TMA)> is 0.00% or less.

4. The photocurable resin composition according to any one of Claims 1 to 3,
wherein the photocurable resin composition contains a (meth)acrylate monomer.

5. The photocurable resin composition according to Claim 4,
wherein the (meth)acrylate monomer includes a methacrylate monomer.

6. The photocurable resin composition according to Claim 4 or 5,
wherein the (meth)acrylate monomer includes one or two or more selected from the group consisting of a monofunctional (meth)acrylate monomer and a bifunctional or higher functional (meth)acrylate monomer.

7. The photocurable resin composition according to Claim 6,
wherein a content of the monofunctional (meth)acrylate monomer is 0 parts by mass or more and 100 parts by mass or less in a case where a total content of the (meth)acrylate monomer is defined as 100 parts by mass.

8. The photocurable resin composition according to any one of Claims 4 to 7,
wherein the (meth)acrylate monomer includes a (meth)acrylate monomer having an alicyclic skeleton.

9. The photocurable resin composition according to Claim 8,
wherein the (meth)acrylate monomer having an alicyclic skeleton has one or two or more skeletons selected from the group consisting of an adamantane skeleton, a norbornane skeleton, and a dicyclopentadiene skeleton.

10. The photocurable resin composition according to Claim 8 or 9,
wherein a content of the (meth)acrylate monomer having an alicyclic skeleton is 30 parts by mass or more and 100 parts by mass or less in a case where a total content of the (meth)acrylate monomer is defined as 100 parts by mass.

11. The photocurable resin composition according to any one of Claims 4 to 10,
wherein the (meth)acrylate monomer includes a (meth)acrylate monomer having a linear hydrocarbon skeleton.

12. The photocurable resin composition according to any one of Claims 1 to 11,
wherein the photocurable resin composition further contains a light stabilizer.

13. The photocurable resin composition according to any one of Claims 1 to 12,
wherein the photocurable resin composition further contains an antioxidant.

14. The photocurable resin composition according to any one of Claims 1 to 13,
wherein the photocurable resin composition further contains a photopolymerization initiator.

15. The photocurable resin composition according to Claim 14,
wherein the photopolymerization initiator includes a photoradical polymerization initiator.

16. The photocurable resin composition according to any one of Claims 1 to 15,
wherein the photocurable resin composition is capable of being used in a casting method.

17. The photocurable resin composition according to any one of Claims 1 to 16,
wherein the photocurable resin composition is capable of being used for one or two or more lenses selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

18. An optical molded body comprising:
a cured product of the photocurable resin composition according to any one of Claims 1 to 17.

19. The optical molded body according to Claim 18,
wherein the optical molded body includes a lens.

20. The optical molded body according to Claim 19,
wherein the lens includes one or two or more selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

21. The optical molded body according to Claim 18,
wherein the optical molded body includes a cover display.

22. The optical molded body according to Claim 21,
wherein the cover display includes one or two or more selected from the group consisting of a cover display for a virtual reality device, a cover display for a mixed reality device, a cover display for an augmented reality device, a cover display for a cross-reality device, and a cover display for a head-mounted display.

23. The optical molded body according to any one of Claims 18 to 22,
wherein a maximum thickness portion is 20.0 mm or less.

24. The optical molded body according to any one of Claims 18 to 23,
wherein a maximum thickness portion is 1.0 mm or more.

25. An optical device comprising the optical molded body according to any one of Claims 18 to 24.
